# EUROPÄISCHE PATENTSCHRIFT

(11) **EP 3 850 719 B1**
(45) Veröffentlichungstag und Bekanntmachung des Hinweises auf die Patenterteilung: **05.08.2026**
(21) Anmeldenummer: 19758401.4
(22) Anmeldetag: 22.08.2019
(51) Int. Cl.: H02J 3/16, H02J 3/32, H02J 3/46, H02J 3/50, H02J 3/38

(54) **WINDPARK MIT EINER STABILISIERUNGSEINHEIT SOWIE EINE SOLCHE STABILISIERUNGSEINHEIT**
WIND FARM COMPRISING A STABILIZATION UNIT, AND SUCH A STABILIZATION UNIT
PARC ÉOLIEN DOTÉ D'UNE UNITÉ DE STABILISATION ET UNITÉ DE STABILISATION DE CE TYPE

(30) Priorität: 14.09.2018 DE 102018122586
(43) Veröffentlichungstag der Anmeldung: 21.07.2021
(73) Patentinhaber: Wobben Properties GmbH, 26607 Aurich (DE)
(72) Erfinder: ROSSO, Roberto, 26605 Aurich (DE); ENGELKEN, Sönke, 28215 Bremen (DE); LISERRE, Marco, 24143 Kiel (DE)
(74) Vertreter: Eisenführ Speiser
(86) Internationale Anmeldenummer: PCT/EP2019/072490
(87) Internationale Veröffentlichungsnummer: WO 2020/052937

(56) Entgegenhaltungen:
- US-A1- 2010 256 970
- US-A1- 2012 292 904
- US-A1- 2017 250 540
- LI CHI ET AL: "Analysis and design of virtual synchronous machine based STATCOM controller", 2014 IEEE 15TH WORKSHOP ON CONTROL AND MODELING FOR POWER ELECTRONICS (COMPEL), IEEE, 22 June 2014 (2014-06-22), pages 1 - 6, XP032628822, DOI: 10.1109/COMPEL.2014.6877134

## Beschreibung

Die vorliegende Erfindung betrifft einen eine Stabilisierungseinheit aufweisenden Windpark sowie eine solche Stabilisierungseinheit.

Windparks weisen üblicherweise eine Vielzahl von Windenergieanlagen auf, die über ein gemeinsames Windparknetz miteinander verbunden sind.

Um die mittels der Windenergieanlagen erzeugte elektrische Leistung in ein elektrisches Versorgungsnetz einzuspeisen, wird das Windparknetz üblicherweise ferner mittels einer Verbindungsleitung und eines Transformators an einem Netzanschlusspunkt an das elektrische Versorgungsnetz angeschlossen.

Zum Erzeugen der elektrischen Leistung selbst weisen die Windenergieanlagen ferner üblicherweise Umrichter auf, die zumeist stromprägend ausgeführt sind.

Dies hat zur Folge, dass spezielle Synchronisierungseinheiten für die Netzerkennung benötigt werden, insbesondere um die Umrichter ordnungsgemäß, insbesondere synchronisiert, mit bzw. am elektrischen Versorgungsnetz betreiben zu können.

Solche Synchronisierungseinheiten können aber die Stabilität des Umrichters und somit die Stabilität des elektrischen Versorgungsnetzes gefährden, insbesondere, wenn sich die Synchronisierungseinheiten von unterschiedlichen Umrichtern gegenseitig beeinflussen bzw. sich gegenseitig aufschwingen.

Insbesondere an schwachen Netzanschlusspunkten, also Netzanschlusspunkten mit einer niedrigen Kurzschlussleistung, kann ein solches Aufschwingen der Synchronisierungseinheiten dazu führen, dass der Windpark nicht stabil am elektrischen Versorgungsnetz betrieben werden kann bzw. das elektrische Versorgungsnetz destabilisiert und daher vom Netz genommen werden muss.

Das Deutsche Patent- und Markenamt hat in der Prioritätsanmeldung zur vorliegenden Anmeldung folgenden Stand der Technik recherchiert: DE 10 2016 124 602 A1, DE 10 2006 047 792 A1 und DE 10 2014 016 664 A1.

Artikel von Chi Li et al.: "Analysis and design of virtual synchronous machine based STATCOM Controller", 2014 IEEE 15TH WORKSHOP ON CONTROL AND MODELING FOR POWER ELECTRONICS (COMPEL), IEEE, 22. Juni 2014 (2014-06-22), Seiten 1-6, XP032628822, betrifft eine Steuereinheit eines STATCOMs zum Emulieren einer virtuellen Synchronmaschine.

US 2010/0256970 A1 beschreibt eine Vorrichtung für die Regulierung von Energieversorgungsnetzen.

Aufgabe der vorliegenden Erfindung ist es daher, eines der obengenannten Probleme zu adressieren, den allgemeinen Stand der Technik zu verbessern oder eine Alternative zu bisher Bekanntem bereitzustellen. Insbesondere soll die Stabilität eines Windparks verbessert werden, der an einem schwachen Netzanschlusspunkt angeschlossen ist, also der eine niedrige Kurzschlussleistung (englischer Fachbegriff: short circuit ratio; kurz: SCR) aufweist, bspw. kleiner als 10.

Erfindungsgemäß wird somit ein Windpark zum Einspeisen elektrischer Leistung in ein elektrisches Versorgungsnetz gemäß Anspruch 1 vorgeschlagen.

Es wird somit ein Windpark vorgeschlagen, der eine Windpark-Nenn-Leistung aufweist und dazu eingerichtet ist, elektrische Leistung in ein elektrisches Versorgungsnetz einzuspeisen.

Der Windpark umfasst hierfür eine Vielzahl von Windenergieanlagen, ein die Vielzahl von Windenergieanlagen verbindendes, elektrisches Windparknetz, welches mittels eines Windparktransformators an einem Netzanschlusspunkt an das elektrische Versorgungsnetz angeschlossen ist, und eine erfindungsgemäße Stabilisierungseinheit, welche mit dem Windparknetz verbunden und zwischen der Vielzahl der Windenergieanlagen und dem elektrischen Versorgungsnetz angeordnet ist, insbesondere um die Stabilität des Windparks zu erhöhen.

Die Stabilisierungseinheit kann hierfür bspw. mit dem Windparknetz oder der Verbindungsleitung zwischen Windparktransformator und Netzanschlusspunkt verbunden sein. Sofern die Stabilisierungseinheit bspw. zwischen Windparktransformator und Netzanschlusspunkt angeordnet ist, kann die Stabilisierungseinheit besonders gut eine Synchronmaschine emulieren, insbesondere auf Windparkebene. Im Falle, dass die Stabilisierungseinheit im Windparknetz angeordnet ist, kann die Stabilität auf Windenergieanlagenebene weiter verbessert werden.

Die Stabilisierungseinheit selbst umfasst hierfür wenigstens einen elektrischen Energiespeicher, der dazu eingerichtet ist, eine elektrische Leistung bereitzustellen, einen mit dem elektrischen Energiespeicher verbundenen Gleichspannungszwischenkreis, der dazu eingerichtet ist, wenigstens die vom elektrischen Energiespeicher bereitgestellte elektrische Leistung zu führen, einen mit dem Gleichspannungszwischenkreis verbunden Wechselrichter, der dazu eingerichtet ist, wenigstens die vom elektrischen Speicher über den Gleichspannungszwischenkreis bereitgestellte elektrische Leistung zu formen, und eine Steuereinheit, die dazu eingerichtet ist, wenigstens den Wechselrichter so anzusteuern, dass die Stabilisierungseinheit am Windpark statisch wie dynamisch wie eine elektromechanische Synchronmaschine erscheint.

Der elektrische Speicher kann hierfür bspw. als elektrische Batterie ausgebildet sein oder eine Vielzahl von Kondensatorbänken umfassen. Bevorzugt wird die Größe des elektrischen Speichers dabei entsprechend der Windpark-Nenn-Leistung gewählt und zwar insbesondere so, dass die Stabilisierungseinheit dazu eingerichtet ist, die vorstehend oder nachstehend beschriebenen Funktionen so auszuführen, dass der Windpark stabilisiert wird.

In einer bevorzugten Ausführungsform ist der elektrische Speicher zudem dazu eingerichtet, mittels der weiteren Bauteile der Stabilisierungseinheit elektrische Leistung aus dem elektrischen Versorgungsnetz oder dem Windparknetz zu entnehmen, um den elektrischen Speicher zu laden und/oder elektrische Leistung in das elektrische Versorgungsnetz oder das Windparknetz, bevorzugt spannungsprägend, einzuspeisen, um den Windpark zu stabilisieren.

Der Gleichspannungszwischenkreis ist ferner in einer bevorzugten Ausführungsform dazu eingerichtet, ebenfalls elektrische Leistung aus dem elektrischen Versorgungsnetz oder dem Windparknetz zu entnehmen, insbesondere um den elektrischen Speicher zu laden.

In einer weiter bevorzugten Ausführungsform weist der Gleichspannungszwischenkreis zudem einen Filter, bspw. einen LCL-Filter auf, der dazu eingerichtet ist, Spannungsoberwellen im Gleichspannungszwischenkreis zu glätten.

Bevorzugt ist der Wechselrichter zudem als Vollumrichter ausgeführt. D.h. der Wechselrichter ist sowohl dazu eingerichtet, elektrische Leistung aus dem Gleichspannungskreis zu entnehmen und diese in das elektrische Versorgungsnetz oder das Windparknetz einzuspeisen, als auch, elektrische Leistung aus dem elektrischen Versorgungsnetz oder dem Windparknetz zu entnehmen und diese in den Gleichspannungszwischenkreis einzuspeisen, insbesondere um den elektrischen Speicher zu laden.

Ferner ist die Steuereinheit bevorzugt auch dazu eingerichtet, wenigstens einen Ladezustand des elektrischen Speichers zu erfassen, um diesen bei der Steuerung des Wechselrichters zu berücksichtigen.

In einer weiter bevorzugten Ausführungsform sind in der Steuereinheit mehrere Betriebsmodi hinterlegt, deren Aktivierung abhängig vom Ladezustand des elektrischen Speichers sind. Bspw. werden Betriebsmodi nicht ausgeführt, wenn der Ladezustand des elektrischen Speichers weniger als 20 Prozent beträgt. Dies hat den Vorteil, dass vorbestimmte Kapazitäten des elektrischen Speichers für bestimmte Betriebsmodi reserviert werden können. Bspw. werden 20 Prozent für den Betriebsmodus: Netzfehler reserviert. In diesem Fall ist die Stabilisierungseinheit dazu eingerichtet, jederzeit auf einen Netzfehler zu speisen, um die Fehlerstelle im elektrischen Versorgungsnetz zu identifizieren.

In einer weiter bevorzugten Ausführungsform ist die Steuereinheit ferner dazu eingerichtet, einen im Gleichspannungszwischenkreis angeordneten Gleichspannungswandler zu steuern.

Ferner wird insbesondere vorgeschlagen, dass die Stabilisierungseinheit wie eine virtuelle Synchronmaschine betrieben wird.

Es wird erfindungsgemäß als insbesondere vorgeschlagen, eine batterie-gespeiste virtuelle Synchronmaschine parallel zum Windpark spannungsprägend zu betreiben, um die Stabilität des Windparks zu erhöhen.

Die Stabilisierungseinheit arbeitet im Wesentlichen spannungsprägend.

Es wird somit vorgeschlagen, dass der Wechselrichter der Stabilisierungseinheit mit einem spannungsprägenden Steuerverfahren betrieben wird, insbesondere so, dass die Stabilisierungseinheit an ihrem Ausgang eine stabile Spannung für den Windpark vorgibt.

In einer bevorzugten Ausführungsform ist der Wechselrichter ferner dazu eingerichtet, spannungsprägend zu arbeiten.

Der Wechselrichter kann somit auch als spannungsprägender Wechselrichter bezeichnet werden.

Ein spannungsprägender Wechselrichter kann eine Spannung auch im Leerlauf bereitstellen, bzw. ohne Strom/Leistung einspeisen. Hierdurch kann insbesondere für stromprägende Windenergieanlagen ein Netzwinkel bereitgestellt werden, dies ermöglicht insbesondere ein Bereitstellen einer korrekten Phasenlage. In einer bevorzugten Ausführungsform weist der spannungsprägende Wechselrichter bzw. die Stabilisierungseinheit keine Synchronisierungseinheit auf.

Vorzugsweise umfasst die Stabilisierungseinheit ferner einen Gleichspannungswandler, der zwischen dem elektrischen Speicher und dem Gleichspannungszwischenkreis angeordnet ist.

Besonders vorteilhaft hierbei ist, dass der elektrische Speicher vom elektrischen Versorgungsnetz bzw. vom Windparknetz, insbesondere galvanisch, entkoppelt ist.

Somit ist es bspw. möglich, unabhängig vom Betriebszustand des elektrischen Versorgungsnetzes oder des Windparknetzes den elektrischen Speicher zu laden oder zu entladen.

Die Stabilisierungseinheit ist am Netzanschlusspunkt angeordnet, bevorzugt zwischen Windparktransformator und elektrischem Versorgungsnetz.

Die Stabilisierungseinheit ist somit nahe dem Netzanschlusspunkt und, nicht innerhalb des Windparknetzes angeordnet. Der Windpark und die Stabilisierungseinheit bilden somit eine funktionale Einheit aus.

Vorzugsweise weist die Stabilisierungseinheit ferner einen Transformator auf, der an einem Ausgang des Wechselrichters angeordnet ist, um die Spannung der bereitgestellten Leistung zu transformieren.

Die Stabilisierungseinheit umfasst somit auch einen Transformator, der dazu eingerichtet ist, die Stabilisierungseinheit mit dem Windparknetz und/oder dem elektrischen Versorgungsnetz zu verbinden.

Die Stabilisierungseinheit und der Transformator bilden dabei bevorzugt eine funktionale Einheit aus. Dies bedeutet insbesondere, dass die Stabilisierungseinheit und dieser Transformator örtlich voneinander getrennt aufgestellt sein können.

In einer besonders bevorzugten Ausführungsform sind die Stabilisierungseinheit und der Transformator in einem Container verbaut.

Besonders vorteilhaft hierbei ist, dass die erfindungsgemäße Stabilisierungseinheit auf einfache und zweckmäßige Art und Weise bei bereits bestehenden Windparks nachgerüstet werden kann.

In einer weiter bevorzugten Ausführungsform ist die Stabilisierungseinheit ferner wie vorstehend oder nachstehend beschrieben ausgeführt.

Die Stabilisierungseinheit ist dazu eingerichtet, den Windpark an einem elektrischen Versorgungsnetz mit einer niedrigen Kurzschlussleistung zu betreiben, bspw. eine Kurschlussleistung kleiner als 10, bevorzugt kleiner als 8, besonders bevorzugt kleiner als 6, insbesondere weiter bevorzugt kleiner 4, insbesondere kleiner als 2.

Es wird somit insbesondere vorgeschlagen, die Komponenten, wie bspw. den elektrischen Speicher, so auszulegen, dass die Stabilisierungseinheit ermöglicht, einen Windpark einer bestimmten Nenn-Leistung an einem Netzanschlusspunkt mit einer bestimmten Kurzschlussleistung zu betreiben. Bspw. weist der elektrische Speicher hierfür 10 Prozent der Nennleistung des Windparks bei einer Kurzschlussleistung von weniger als 8 auf.

Der elektrische Speicher der Stabilisierungseinheit ist unter Berücksichtigung der Windpark-Nenn-Leistung und einer Entfernung zwischen Stabilisierungseinheit und dem Windpark oder dem Windparktransformator ausgelegt worden.

Vorzugsweise weist der elektrische Speicher wenigstens 1 Prozent, bevorzugt wenigstens 5 Prozent, besonders bevorzugt wenigstens 10 Prozent, der Windpark-Nenn-Leistung auf.

Vorzugsweise ist die Stabilisierungseinheit dazu eingerichtet, elektrische Wirk- und Blindleistung in das elektrische Versorgungsnetz einzuspeisen und/oder in das Windparknetz einzuspeisen und/oder aus dem elektrischen Versorgungsnetz zu entnehmen und/oder aus dem Windparknetz zu entnehmen.

In einer besonders bevorzugten Ausführungsform ist die Stabilisierungseinheit ferner dazu eingerichtet, elektrische Leistung in das elektrische Versorgungsnetz einzuspeisen und/oder in das Windparknetz einzuspeisen und/oder aus dem elektrischen Versorgungsnetz zu entnehmen und/oder aus dem Windparknetz zu entnehmen.

Es wird somit insbesondere vorgeschlagen, dass die Stabilisierungseinheit in einem Vier-Quadranten-Betrieb betrieben werden kann. D.h. die Stabilisierungseinheit kann in Bezug auf Wirk- und Blindleistung sowohl als Verbraucher als auch als Erzeuger fungieren. Bspw. kann die Stabilisierungseinheit elektrische Blindleistung in das elektrische Versorgungsnetz einspeisen und gleichzeitig elektrische Wirkleistung aus dem elektrischen Versorgungsnetz entnehmen.

Vorzugsweise ist die Stabilisierungseinheit dazu eingerichtet, mittels einer Wirkleistungs-Frequenz-Kennlinie und/oder einer Blindleistungs-Spannungs-Kennlinie das elektrische Versorgungsnetz zu stützen.

Es wird somit insbesondere vorgeschlagen, dass sowohl der Wechselrichter als auch die Steuereinheit dazu eingerichtet sind, mittels einer Wirkleistungs-Frequenz-Kennlinie und/oder einer Blindleistungs-Spannungs-Kennlinie betrieben zu werden, insbesondere so, dass das elektrische Versorgungsnetz gestützt wird, bevorzugt mittels einer kennlinien-entsprechenden Einspeisung von Wirk- und/oder Blindleistung.

Bspw. weist die Steuereinheit hierfür ein Register auf, in welchem die Kennlinien hinterlegt sind. Bei Bedarf können dann diese Kennlinien aktiviert werden, bspw. durch einen Netzbetreiber oder eine Windparksteuereinheit.

In einer besonders bevorzugten Ausführungsform weist der elektrische Speicher hierfür wenigstens 20 Prozent der Nenn-Leistung des Windparks auf. Es wurde nämlich erfindungsgemäß erkannt, dass der elektrische Speicher eine Mindestgröße aufweisen muss, um weitere Funktionen neben der Stabilisierung des Windparks zu übernehmen.

Die Windenergieanlagen arbeiten, insbesondere mittels eines Vollumrichters, im Wesentlichen stromprägend.

Es wurde nämlich erfindungsgemäß ferner erkannt, dass die erfindungsgemäße Stabilisierungseinheit dazu führt, dass keine weiteren spannungsprägenden Erzeuger im oder in der Nähe des Windparks benötigt werden.

Besonders vorteilhaft hierbei ist zum einen, dass die erfindungsgemäße Stabilisierungseinheit einfach bei bereits stromprägend arbeitenden Windparks nachgerüstet werden kann und zum anderen bei noch zu errichtenden Windparks auf spannungsprägende Steuerverfahren bei den Windenergieanlagen verzichtet werden kann.

Erfindungsgemäß wird ferner eine Stabilisierungseinheit, insbesondere für einen Windpark, vorgeschlagen, die wie vorstehend oder nachstehend beschrieben ausgeführt ist.

Die vorliegende Erfindung wird nun nachfolgend exemplarisch anhand von Ausführungsbeispielen unter Bezugnahme auf die begleitenden Figuren näher erläutert.
- Fig. 1: zeigt eine schematische Ansicht einer Windenergieanlage eines erfindungsgemäßen Windparks und
- Fig. 2: zeigt einen schematischen Aufbau eines erfindungsgemäßen Windparks in einer Ausführungsform.

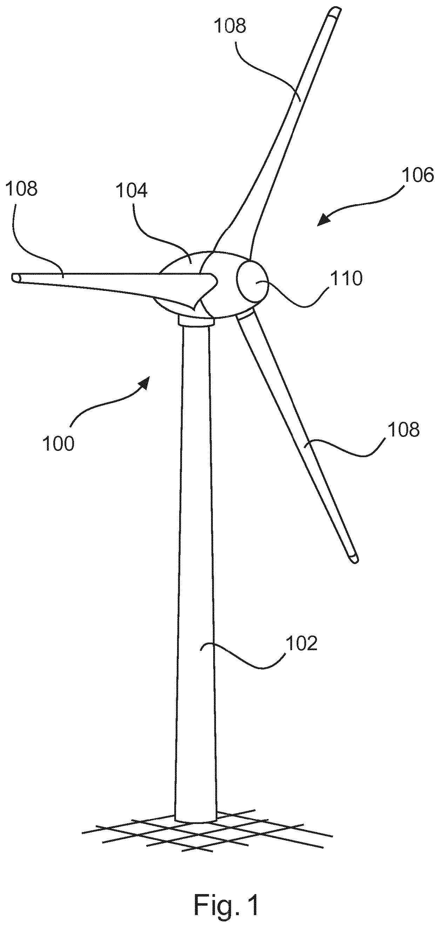

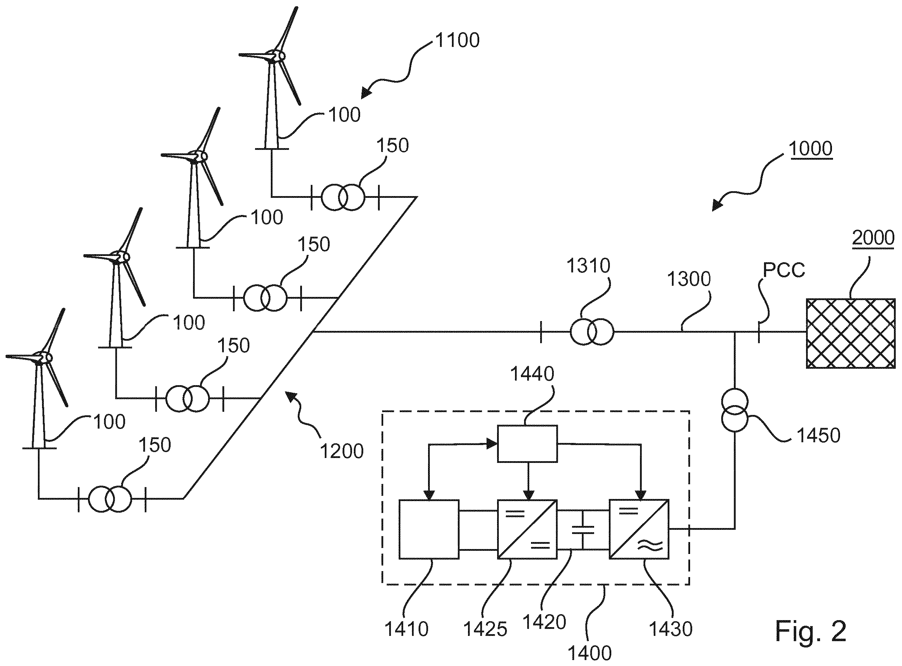

Fig. 1 zeigt eine Windenergieanlage 100 eines erfindungsgemäßen Windparks, wie bspw. in Fig. 2 gezeigt.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der erzeugt hierdurch einen Strom, der mittels eines Vollumrichters, der stromprägend arbeitet, auf einen Windenergieanlagentransformator gegeben wird, der mit einem Windparknetz verbunden ist.

Fig. 2 zeigt einen schematischen Aufbau eines erfindungsgemäßen Windparks 1000 in einer Ausführungsform.

Der Windpark 1000, der eine Windpark-Nenn-Leistung aufweist, ist zum Einspeisen elektrischer Leistung mittels einer einen Windparktransformator 1310 aufweisenden Verbindungsleitung 1300 am Netzanschlusspunkt PCC mit einem elektrischen Versorgungsnetz 2000 verbunden.

Der Windpark 1000 umfasst hierfür eine Vielzahl von Windenergieanlagen 1100, bspw. vier Windenergieanlagen 100, wie bevorzugt in Fig. 1 gezeigt.

Die Windenergieanlagen 100 sind jeweils stromprägend ausgeführt und über Transformatoren 150 mit einem die Vielzahl der Windenergieanlagen 1100 verbindenden Windparknetz 1200 miteinander verbunden.

Zum Stabilisieren des Windparks 1000 ist ferner eine erfindungsgemäße Stabilisierungseinheit 1400 vorgesehen, die mittels eines Transformator 1450 an die Verbindungsleitung 1300 nahe des Netzanschlusspunktes PCC angeschlossen ist.

Die Stabilisierungseinheit 1400 umfasst einen elektrischen Speicher 1410, einen Gleichspannungszwischenkreis 1420 mit Gleichspannungswandler 1425, einen Wechselrichter 1430 und eine Steuereinheit 1440.

Der elektrische Speicher 1410 ist dazu eingerichtet, eine elektrische Leistung bereitzustellen, bspw. 10 Prozent der Windpark-Nenn-Leistung.

Der Gleichspannungszwischenkreis 1420 ist mittels eines Gleichspannungswandlers 1425 mit dem elektrischen Speicher 1410 und ferner mit dem Wechselrichter 1430 verbunden. Zudem ist der Gleichspannungszwischenkreis 1420 dazu eingerichtet, wenigstens die vom elektrischen Energiespeicher 1410 bereitgestellte elektrische Leistung zu führen. Bevorzugt weist der der Gleichspannungszwischenkreis 1420 ferner einen Filter mit LCL-Charakteristik auf.

Der Wechselrichter 1430 ist mit dem Gleichspannungszwischenkreis 1420 und ferner mit dem Transformator 1450 verbunden. Zudem ist der Wechselrichter 1430 dazu eingerichtet, wenigstens die vom elektrischen Speicher 1410 über den Gleichspannungskreis 1420 bereitgestellte elektrische Leistung zu formen.

Die Steuereinheit 1440 ist bevorzugt mit dem elektrischen Speicher 1410, dem Gleichspannungswandler 1425 und dem Wechselrichter 1430 verbunden. Zudem ist die Steuereinheit 1440 wenigstens dazu eingerichtet, den Wechselrichter 1430 so anzusteuern, dass die Stabilisierungseinheit 1400 am Windpark statisch wie dynamisch wie eine elektromechanische Synchronmaschine erscheint.

Die Stabilisierungseinheit 1400 ist somit bevorzugt spannungsprägend ausgeführt und wird wie eine virtuelle Synchronmaschine betrieben.

Die Stabilisierungseinheit 1400, insbesondere die Steuereinheit 1440 und der elektrische Speicher 1410, sind dabei ferner bevorzugt so ausgeführt, dass der Windpark 1000 an einem elektrischen Versorgungsnetz mit einer niedrigen Kurzschlussleistung betrieben werden kann.

Hierfür ist der elektrische Speicher 1410 bevorzugt unter Berücksichtigung der Windpark-Nenn-Leistung und der Entfernung zwischen Stabilisierungseinheit 1400 und dem Windpark 1000 ausgelegt, insbesondere unter Berücksichtigung der Netzimpedanz zwischen Windparktransformator 1310 und der Stabilisierungseinheit 1400.

Zudem ist die Stabilisierungseinheit 1400 dazu eingerichtet, elektrische Leistung in das elektrische Versorgungsnetz 2000 einzuspeisen und/oder in das Windparknetz 1200 einzuspeisen und/oder aus dem elektrischen Versorgungsnetz 2000 zu entnehmen und/oder aus dem Windparknetz 1200 zu entnehmen.

Ferner ist die Stabilisierungseinheit 1400 dazu eingerichtet, mittels einer Wirkleistungs-Frequenz-Kennlinie und/oder einer Blindleistungs-Spannungs-Kennlinie das elektrische Versorgungsnetz 2000 zu stützen.

Die vorliegende Erfindung bietet eine Reihe von Vorteilen, die nachfolgend, und nicht abschließend, gelistet sind:
1. Die Erhöhung der Stabilität eines Windparks, der an einem schwachen Netzanschlusspunkt angeschlossen ist, kann durch einen Einsatz der erfindungsgemäßen Stabilisierungseinheit, deren Nennleistung unter 10% der Parkleistung beträgt, realisiert werden. Es wird somit eine besonders kostengünstige Variante zu bisher Bekanntem bereitgestellt.
2. Dadurch, dass die Stabilisierungseinheit wie eine virtuelle Synchronmaschine betrieben wird, kann die für eine Stabilisierung des Windparks benötigte Leistung gegenüber bspw. bekannten STATCOMs um ein Vielfaches reduziert werden. Hierdurch ist die erfindungsgemäße Lösung auch kostengünstiger als bisher bekannte Alternativen.
3. Die Stabilisierungseinheit ist grdsl. dazu vorbereitet, Systemdienstleistungen zu erfüllen und kann durch die vorstehend beschriebene Dimensionierung und Ansteuerung auch auf einfache Weise dazu eingerichtet werden.
4. Die Stabilisierungseinheit kann ferner dazu eingerichtet sein, in sogenannten Containern verbaut zu werden. D.h. sie kann sowohl einfach transportiert als auch in bereits bestehenden Windparks implementiert werden.

## Patentansprüche

1. Windpark (1000), aufweisend eine Windpark-Nenn-Leistung, zum Einspeisen elektrischer Leistung in ein elektrisches Versorgungsnetz (2000), umfassend:
- eine Vielzahl von Windenergieanlagen (1100),
- ein die Vielzahl von Windenergieanlagen (1100) verbindendes, elektrisches Windparknetz (1200), welches
- mittels eines Windparktransformators (1310) an einem Netzanschlusspunkt (PCC) an das elektrische Versorgungsnetz (2000) angeschlossen ist, und
- eine Stabilisierungseinheit (1400), welche mit dem Windparknetz (1200) verbunden und zwischen der Vielzahl der Windenergieanlagen (1100) und dem elektrischen Versorgungsnetz (2000) angeordnet ist, um die Stabilität des Windparks (1000) zu erhöhen, wenigstens umfassend:
- einen elektrischen Energiespeicher (1410), der dazu eingerichtet ist, eine elektrische Leistung bereitzustellen,
- einen mit dem elektrischen Energiespeicher (1410) verbundenen Gleichspannungszwischenkreis (1420), der dazu eingerichtet ist, wenigstens die vom elektrischen Energiespeicher (1410) bereitgestellte elektrische Leistung zu führen,
- einen mit dem Gleichspannungszwischenkreis (1420) verbundenen Wechselrichter (1430), der dazu eingerichtet ist, wenigstens die vom elektrischen Speicher (1410) über den Gleichspannungszwischenkreis (1420) bereitgestellte elektrische Leistung zu formen, und
- eine Steuereinheit (1440), die dazu eingerichtet ist, wenigstens den Wechselrichter (1430) so anzusteuem, dass die Stabilisierungseinheit (1400) am Windpark (1000) statisch wie dynamisch wie eine elektromechanische Synchronmaschine erscheint; und
- die Stabilisierungseinheit (1400) dazu eingerichtet ist, den Windpark (1000) an einem elektrischen Versorgungsnetz (2000) mit einer niedrigen Kurzschlussleistung zu betreiben, wobei
- die Stabilisierungseinheit (1400) am Netzanschlusspunkt (PCC) angeordnet ist, bevorzugt zwischen Windparktransformator (1310) und elektrischem Versorgungsnetz (2000); und
- die Stabilisierungseinheit (1400) im Wesentlichen spannungsprägend arbeitet und - die Windenergieanlagen (100) bzw. die Vielzahl der Windenergieanlagen (1100) im Wesentlichen stromprägend arbeiten, wobei
- der elektrische Speicher (1410) der Stabilisierungseinheit (1400) unter Berücksichtigung der Windpark-Nenn-Leistung und einer Entfernung zwischen Stabilisierungseinheit (1400) und dem Windpark (1000) ausgelegt wurde.

2. Windpark (1000) nach Anspruch 1, wobei
- die Stabilisierungseinheit (1400) ferner einen Gleichspannungswandler (1425) umfasst, der zwischen dem elektrischen Speicher (1410) und dem Gleichspannungszwischenkreis (1420) angeordnet ist.

3. Windpark (1000) nach einem der vorstehenden Ansprüche, wobei
- die Stabilisierungseinheit (1400) ferner einen Transformator (1450) aufweist, der an einem Ausgang des Wechselrichters (1430) angeordnet ist, um die Spannung der bereitgestellten Leistung zu transformieren.

4. Windpark (1000) nach einem der vorstehenden Ansprüche, wobei
- der elektrische Speicher (1410) wenigstens 1 Prozent, bevorzugt wenigstens 5 Prozent, besonders bevorzugt wenigstens 10 Prozent, der Windpark-Nenn-Leistung aufweist.

5. Windpark (1000) nach einem der vorstehenden Ansprüche, wobei
- die Stabilisierungseinheit (1400) dazu eingerichtet ist, elektrische Leistung in das elektrische Versorgungsnetz (2000) einzuspeisen und/oder in das Windparknetz (1200) einzuspeisen und/oder aus dem elektrischen Versorgungsnetz (2000) zu entnehmen und/oder aus dem Windparknetz (1200) zu entnehmen.

6. Windpark (1000) nach einem der vorstehenden Ansprüche, wobei
- die Stabilisierungseinheit (1400) dazu eingerichtet ist, mittels einer Wirkleistungs-Frequenz-Kennlinie und/oder einer Blindleistungs-Spannungs-Kennlinie das elektrische Versorgungsnetz (2000) zu stützen.

7. Windpark (1000) nach einem der vorstehenden Ansprüche, wobei
- die Windenergieanlagen (100) bzw. die Vielzahl der Windenergieanlagen (1100), mittels eines Vollumrichters im Wesentlichen stromprägend arbeiten.

8. Stabilisierungseinheit (1400) für einen Windpark (1000), aufweisend eine Vielzahl von Windenergieanlagen (1000), zum Verbinden mit einem Windparknetz (1200), wenigstens umfassend:
- einen elektrischen Energiespeicher (1410), der dazu eingerichtet ist, eine elektrische Leistung bereitzustellen,
- einen mit dem elektrischen Energiespeicher (1410) verbundenen Gleichspannungszwischenkreis (1420), der dazu eingerichtet ist, wenigstens die vom elektrischen Energiespeicher (1410) bereitgestellte elektrische Leistung zu führen,
- einen mit dem Gleichspannungszwischenkreis (1420) verbundenen Wechselrichter (1430), der dazu eingerichtet ist, wenigstens die vom elektrischen Speicher (1410) über den Gleichspannungszwischenkreis (1420) bereitgestellte elektrische Leistung zu formen, und
- eine Steuereinheit (1440), die dazu eingerichtet ist, wenigstens den Wechselrichter (1430) so anzusteuern, dass die Stabilisierungseinheit (1400) am Windpark (1000) statisch wie dynamisch wie eine elektromechanische Synchronmaschine erscheint, und
- die Stabilisierungseinheit (1400) dazu eingerichtet ist, den Windpark (1000) an einem elektrischen Versorgungsnetz (2000) mit einer niedrigen Kurzschlussleistung zu betreiben, wobei
- die Stabilisierungseinheit (1400) am Netzanschlusspunkt (PCC) angeordnet ist, bevorzugt zwischen Windparktransformator (1310) und elektrischem Versorgungsnetz (2000); und
- die Stabilisierungseinheit (1400) im Wesentlichen spannungsprägend arbeitet und
- die Windenergieanlagen (100) bzw. die Vielzahl der Windenergieanlagen (1100) im Wesentlichen stromprägend arbeiten, wobei
- der elektrische Speicher (1410) der Stabilisierungseinheit (1400) unter Berücksichtigung der Windpark-Nenn-Leistung und einer Entfernung zwischen Stabilisierungseinheit (1400) und dem Windpark (1000) ausgelegt wurde.

9. Stabilisierungseinheit (1400) nach Anspruch 8**,** ferner umfassend:
- einen Gleichspannungswandler (1425), der zwischen dem elektrischen Speicher (1410) und dem Gleichspannungszwischenkreis (1420) angeordnet ist.

10. Stabilisierungseinheit (1400) nach einem der Ansprüche 8 bis 9 ferner umfassend:
- einen Transformator (1450), der an einem Ausgang des Wechselrichters (1430) angeordnet ist, um die Spannung der bereitgestellten Leistung zu transformieren.

## Claims

1. A wind farm (1000), having a wind farm nominal power, for feeding electrical power into an electrical supply network (2000), comprising:
- a plurality of wind power installations (1100),
- an electrical wind farm network (1200) which connects the plurality of wind power installations (1100), which
- is connected to the electrical supply network (2000) at a network connection point (PCC) by means of a wind farm transformer (1310), and
- a stabilization unit (1400) which is connected to the wind farm network (1200) and is arranged between the plurality of wind power installations (1100) and the electrical supply network (2000), in order to increase the stability of the wind farm (1000), at least comprising:
- an electrical energy storage device (1410) which is set up to provide an electrical power,
- a direct voltage intermediate circuit (1420) which is connected to the electrical energy storage device (1410) and which is set up to conduct at least the electrical power provided by the electrical energy storage device (1410),
- an inverter (1430) which is connected to the direct voltage intermediate circuit (1420) and which is set up to form at least the electrical power provided by the electrical storage device (1410) via the direct voltage intermediate circuit (1420), and
- a control unit (1440) which is set up to control at least the inverter (1430) in such a way that the stabilization unit (1400) at the wind farm (1000) appears, statically as well as dynamically, like an electromechanical synchronous machine; and
- the stabilization unit (1400) is set up to operate the wind farm (1000) on an electrical supply network (2000) with a low short circuit power, wherein
- the stabilization unit (1400) is arranged at the network connection point (PCC), preferably between the wind farm transformer (1310) and the electrical supply network (2000); and
- the stabilization unit (1400) operates in a substantially voltage impressing manner and the wind power installation (100) or the plurality of wind power installations operates in a substantially current impressing manner, wherein
- the electrical storage device (1410) of the stabilization unit (1400) has been designed taking into account the wind farm nominal power and a distance between the stabilization unit (1400) and the wind farm (1000).

2. The wind farm (1000) as claimed in claim 1, wherein
- the stabilization unit (1400) further comprises a DC-DC converter (1425) which is arranged between the electrical storage device (1410) and the direct voltage intermediate circuit (1420).

3. The wind farm (1000) as claimed in one of the preceding claims, wherein
- the stabilization unit (1400) further has a transformer (1450) which is arranged at an output of the inverter (1430), in order to transform the voltage of the power provided.

4. The wind farm (1000) as claimed in one of the preceding claims, wherein
- the electrical storage device (1410) has at least 1 percent, preferably at least 5 percent, particularly preferably at least 10 percent, of the wind farm nominal power.

5. The wind farm (1000) as claimed in one of the preceding claims, wherein
- the stabilization unit (1400) is set up to feed electrical power into the electrical supply network (2000) and/or into the wind farm network (1200) and/or to extract it from the electrical supply network (2000) and/or from the wind farm network (1200).

6. The wind farm (1000) as claimed in one of the preceding claims, wherein
- the stabilization unit (1400) is set up to support the electrical supply network (2000) by means of an active power frequency characteristic and/or a reactive power voltage characteristic.

7. The wind farm (1000) as claimed in one of the preceding claims, wherein
- the wind power installations (100) or the plurality of wind power installations (1100) operate in a substantially current impressing manner by means of a full converter.

8. A stabilization unit (1400) for a wind farm (1000) having a plurality of wind power installations (1100), for connecting to a wind farm network (1200), at least comprising:
- an electrical energy storage device (1410) which is set up to provide an electrical power,
- a direct voltage intermediate circuit (1420) which is connected to the electrical energy storage device (1410) and which is set up to conduct at least the electrical power provided by the electrical energy storage device (1410),
- an inverter (1430) which is connected to the direct voltage intermediate circuit (1420) and which is set up to form at least the electrical power provided by the electrical storage device (1410) via the direct voltage intermediate circuit (1420), and
- a control unit (1440) which is set up to control at least the inverter (1430) in such a way that the stabilization unit (1400) at the wind farm (1000) appears, statically as well as dynamically, like an electromechanical synchronous machine, and
- the stabilization unit (1400) is set up to operate the wind farm (1000) on an electrical supply network (2000) with a low short circuit power, wherein
- the stabilization unit (1400) is arranged at the network connection point (PCC), preferably between the wind farm transformer (1310) and the electrical supply network (2000); and
- the stabilization unit (1400) operates in a substantially voltage impressing manner and
- the wind power installation (100) or the plurality of wind power installations operates in a substantially current impressing manner, wherein
- the electrical storage device (1410) of the stabilization unit (1400) has been designed taking into account the wind farm nominal power and a distance between the stabilization unit (1400) and the wind farm (1000).

9. The stabilization unit (1400) as claimed in claim 8 , further comprising:
- a DC-DC converter (1425) which is arranged between the electrical storage device (1410) and the direct voltage intermediate circuit (1420).

10. The stabilization unit (1400) as claimed in one of claims 8 to 9, further comprising:
- a transformer (1450) which is arranged at an output of the inverter (1430), in order to transform the voltage of the power provided.

## Revendications

1. Parc éolien (1000), présentant une puissance nominale de parc éolien, pour l'injection d'une puissance électrique dans un réseau d'alimentation électrique (2000), comprenant :
- une pluralité d'éoliennes (1100),
- un réseau de parc éolien électrique (1200) reliant la pluralité d'éoliennes (1100), lequel
- est raccordé au réseau d'alimentation électrique (2000) sur un point de raccordement au réseau (PCC) au moyen d'un transformateur de parc éolien (1310), et
- une unité de stabilisation (1400), qui est reliée au réseau du parc éolien (1200) et est disposée entre la pluralité d'éoliennes (1100) et le réseau d'alimentation électrique (2000), pour augmenter la stabilité du parc éolien (1000), comprenant au moins :
- un accumulateur d'énergie électrique (1410), qui est mis au point pour fournir une puissance électrique,
- un circuit intermédiaire à tension continue (1420) relié à l'accumulateur d'énergie électrique (1410), qui est mis au point pour conduire au moins la puissance électrique fournie par l'accumulateur d'énergie électrique (1410),
- un onduleur (1430) relié au circuit intermédiaire à tension continue (1420), qui est mis au point pour former au moins la puissance électrique fournie par l'accumulateur électrique (1410) par l'intermédiaire du circuit intermédiaire à tension continue (1420), et
- une unité de commande (1440), qui est mise au point pour piloter au moins l'onduleur (1430) de telle sorte que l'unité de stabilisation (1400) sur le parc éolien (1000) apparaît comme étant statique et dynamique comme une machine synchrone électromécanique ; et
- l'unité de stabilisation (1400) étant mise au point pour faire fonctionner le parc éolien (1000) sur un réseau d'alimentation électrique (2000) avec une faible puissance de court-circuit, dans lequel
- l'unité de stabilisation (1400) est disposée sur le point de raccordement au réseau (PCC), de manière préférée entre le transformateur de parc éolien (1310) et le réseau d'alimentation électrique (2000) ; et
- l'unité de stabilisation (1400) fonctionne en formant sensiblement une tension et - les éoliennes (100) ou la pluralité d'éoliennes (1100) fonctionnent en formant sensiblement un courant, dans lequel
- l'accumulateur électrique (1410) de l'unité de stabilisation (1400) a été conçu en tenant compte de la puissance nominale de parc éolien et d'une distance entre l'unité de stabilisation (1400) et le parc éolien (1000).

2. Parc éolien (1000) selon la revendication 1, dans lequel
- l'unité de stabilisation (1400) comprend en outre un convertisseur de courant continu (1425), qui est disposé entre l'accumulateur électrique (1410) et le circuit intermédiaire à tension continue (1420).

3. Parc éolien (1000) selon l'une quelconque des revendications précédentes, dans lequel
- l'unité de stabilisation (1400) présente en outre un transformateur (1450), qui est disposé sur une sortie de l'onduleur (1430) pour transformer la tension de la puissance fournie.

4. Parc éolien (1000) selon l'une quelconque des revendications précédentes, dans lequel
- l'accumulateur électrique (1410) présente au moins 1 pour cent, de manière préférée au moins 5 pour cent, de manière particulièrement préférée au moins 10 pour cent, de la puissance nominale de parc éolien.

5. Parc éolien (1000) selon l'une quelconque des revendications précédentes, dans lequel
- l'unité de stabilisation (1400) est mise au point pour injecter de la puissance électrique dans le réseau d'alimentation électrique (2000) et/ou dans le réseau de parc éolien (1200) et/ou pour en prélever du réseau d'alimentation électrique (2000) et/ou pour en prélever du réseau de parc éolien (1200).

6. Parc éolien (1000) selon l'une quelconque des revendications précédentes, dans lequel
- l'unité de stabilisation (1400) est mise au point pour soutenir le réseau d'alimentation électrique (2000) au moyen d'une courbe caractéristique de fréquence-puissance active et/ou d'une courbe caractéristique de tension-puissance réactive.

7. Parc éolien (1000) selon l'une quelconque des revendications précédentes, dans lequel
- les éoliennes (100) ou la pluralité d'éoliennes (1100) fonctionnent en formant sensiblement un courant au moyen d'un convertisseur.

8. Unité de stabilisation (1400) pour un parc éolien (1000), présentant une pluralité d'éoliennes (1000), destinée à être reliée à un réseau de parc éolien (1200), comprenant au moins :
- un accumulateur d'énergie électrique (1410), qui est mis au point pour fournir une puissance électrique,
- un circuit intermédiaire à tension continue (1420) relié à l'accumulateur d'énergie électrique (1410), qui est mis au point pour guider au moins la puissance électrique fournie par l'accumulateur d'énergie électrique (1410),
- un onduleur (1430) relié au circuit intermédiaire à tension continue (1420), qui est mis au point pour former au moins la puissance électrique fournie par l'accumulateur électrique (1410) par l'intermédiaire du circuit intermédiaire à tension continue (1420), et
- une unité de commande (1440), qui est mise au point pour piloter au moins l'onduleur (1430) de telle sorte que l'unité de stabilisation (1400) sur le parc éolien (1000) apparaît comme étant statique et dynamique comme une machine synchrone électromécanique, et
- l'unité de stabilisation (1400) étant mise au point pour faire fonctionner le parc éolien (1000) sur un réseau d'alimentation électrique (2000) avec une faible puissance de court-circuit, dans laquelle
- l'unité de stabilisation (1400) est disposée sur le point de raccordement au réseau (PCC), de manière préférée entre le transformateur de parc éolien (1310) et le réseau d'alimentation électrique (2000) ; et
- l'unité de stabilisation (1400) fonctionne en formant sensiblement une tension, et
- les éoliennes (100) ou la pluralité d'éoliennes (1100) fonctionnent en formant sensiblement un courant, dans laquelle
- l'accumulateur électrique (1410) de l'unité de stabilisation (1400) a été conçu en tenant compte de la puissance nominale de parc éolien et d'une distance entre l'unité de stabilisation (1400) et le parc éolien (1000).

9. Unité de stabilisation (1400) selon la revendication 8, comprenant en outre :
- un convertisseur de tension continue (1425), qui est disposé entre l'accumulateur électrique (1410) et le circuit intermédiaire à tension continue (1420).

10. Unité de stabilisation (1400) selon l'une quelconque des revendications 8 à 9, comprenant en outre :
- un transformateur (1450), qui est disposé sur une sortie de l'onduleur (1430) pour transformer la tension de la puissance fournie.
